# FASCICULE DE BREVET EUROPEEN

(11) **EP 3 276 810 B1**
(45) Date de publication et mention de la délivrance du brevet: **02.06.2021**
(21) Numéro de dépôt: 17180386.9
(22) Date de dépôt: 07.07.2017
(51) Int. Cl.: H02M 3/335, H02M 3/338

(54) **CONVERTISSEUR DC-DC ISOLÉ ET BATTERIE ÉLECTRIQUE COMPRENANT UN CONVERTISSEUR DC-DC ISOLÉ**
ISOLIERTER DC-DC-WANDLER UND ELEKTRISCHE BATTERIE, DIE EINEN SOLCHEN ISOLIERTEN DC-DC-WANDLER UMFASST
INSULATED DC-DC CONVERTER AND ELECTRIC BATTERY COMPRISING AN INSULATED DC-DC CONVERTER

(30) Priorité: 28.07.2016 FR 1657257
(43) Date de publication de la demande: 31.01.2018
(73) Titulaire: Commissariat à l'Energie Atomique et aux Energies Alternatives, 75015 Paris (FR)
(72) Inventeur: CHATROUX, Daniel, 38470 TECHE (FR); ROUX, Andy, 38110 CESSIEU (FR); GARNIER, Laurent, 69970 MARENNES (FR); DAUCHY, Julien, 73000 CHAMBERY (FR)
(74) Mandataire: Cabinet Beaumont

(56) Documents cités:
- WO-A1-2013/103756
- FR-A1- 2 664 777
- FR-A1- 3 001 350

## Description

### Domaine

La présente demande concerne le domaine des convertisseurs assurant la transformation, avec isolement, d'une tension continue primaire en une tension continue secondaire, ou convertisseurs DC-DC isolés.

La présente demande concerne en outre le domaine des batteries électriques, et vise en particulier une batterie électrique comportant un circuit de gestion d'énergie comprenant un ou plusieurs convertisseurs DC-DC isolés.

### Exposé de l'art antérieur

La demande de brevet français FR3001350 décrit un convertisseur d'énergie électrique à découpage à entrée en courant.

La demande de brevet français FR2664777 décrit des exemples de convertisseurs DC-DC isolés combinant un circuit LC résonant parallèle et un ou plusieurs transformateurs.

La figure 1 est une reproduction de la figure 1 de la demande de brevet français FR2664777, et illustre un exemple d'un convertisseur 1 assurant la transformation, avec isolement d'une tension continue primaire E₁ en une tension continue secondaire E₂.

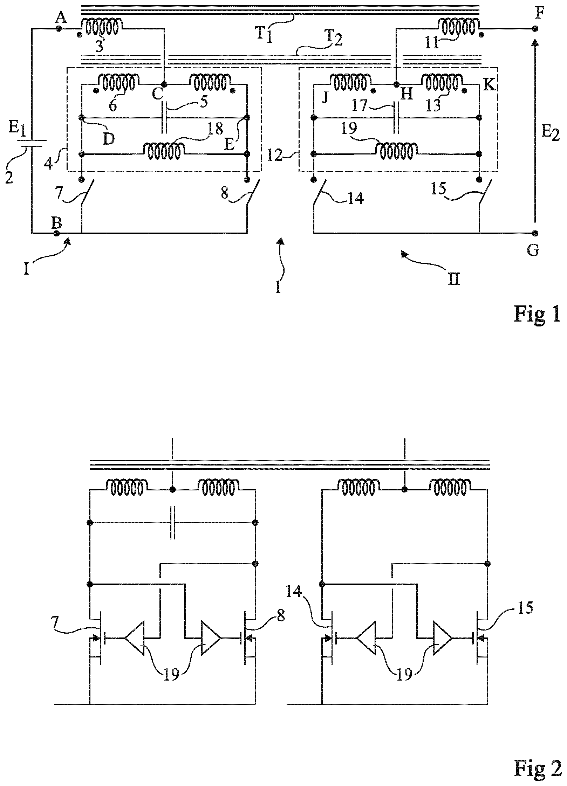

Le convertisseur de la figure 1 comprend un étage primaire I et un étage secondaire II.

L'étage primaire I est relié, entre des bornes A et B, à une source continue 2 délivrant la tension primaire E₁. L'étage primaire I comprend un enroulement primaire 3 associé en série avec un circuit résonant parallèle 4. L'enroulement primaire 3 constitue le primaire d'un transformateur T₁. Dans cet exemple, le circuit résonant parallèle 4 comprend au moins un condensateur 5 associé en parallèle avec au moins un enroulement primaire 6 présentant un point milieu C relié à une extrémité de l'enroulement 3. L'autre extrémité de l'enroulement 3 est reliée à la borne A. On désigne par D et E les noeuds communs entre l'enroulement 6 et le condensateur 5. Le circuit résonant 4 comporte en outre un interrupteur commandé 7 reliant le noeud D au noeud B, et un interrupteur commandé 8 reliant le noeud E au noeud B. L'enroulement 6 constitue le primaire d'un transformateur T₂.

L'étage secondaire II est relié entre des bornes F et G de fourniture de la tension continue E₂. L'étage secondaire II comprend un enroulement secondaire 11 constituant le secondaire du transformateur T₁. Dans cet exemple, le transformateur T₁ est agencé de manière que le signal délivré par l'enroulement secondaire 11 se trouve en phase par rapport au signal engendré par l'enroulement primaire 3, comme illustré par les points situés au niveau des enroulements 3 et 11. L'enroulement 11 est monté en série avec un circuit parallèle 12 comportant au moins un enroulement secondaire 13 présentant un point milieu H relié à une extrémité de l'enroulement 11, l'autre extrémité de l'enroulement 11 étant reliée à la borne F. L'enroulement 13 constitue le secondaire du transformateur T₂. Dans cet exemple, le transformateur T₂ est agencé de sorte que le signal délivré par l'enroulement 13 soit en phase avec celui engendré par l'enroulement 6. On désigne par J et K les extrémités de l'enroulement 13. Le circuit parallèle 12 comporte en outre un interrupteur commandé 14 reliant le noeud J au noeud G, et un interrupteur commandé 15 reliant le noeud K au noeud G.

Le convertisseur de la figure 1 comporte en outre des moyens de commande, non représentés, prévus pour assurer, pendant une phase déterminée, simultanément l'ouverture de l'interrupteur 7 de l'étage primaire I et de l'interrupteur 14 de l'étage secondaire II et la fermeture de l'interrupteur 8 de l'étage primaire I et de l'interrupteur 15 de l'étage secondaire II, et, pendant une phase subséquente, un fonctionnement inversé des interrupteurs.

Le fonctionnement du convertisseur 1 de la figure 1 est le suivant. La source de tension d'entrée 2 et l'enroulement 3 se comportent comme une source de courant alimentant le circuit résonant 4. En considération du mode de commande des interrupteurs, il apparaît, entre les noeuds D et E du circuit résonant 4, un signal périodique composé, pour chaque période élémentaire, d'une alternance positive pendant laquelle l'interrupteur 7 est ouvert et l'interrupteur 8 est fermé, et d'une alternance négative pendant laquelle l'interrupteur 7 est fermé et l'interrupteur 8 est ouvert. La tension V_{C/B} du point C par rapport au point B est formée par des alternances consécutives de même nature, à savoir positives dans cet exemple, de valeur d'amplitude maximale égale à (π/2)*E₁. La tension V_{A/C} du point A par rapport au point C correspond à la différence entre la tension continue d'entrée E₁ et la tension V_{C/B}.

Au secondaire, du fait du couplage électromagnétique entre les enroulements 13 et 6 (transformateur T₂), il apparaît entre les bornes H et G une tension V_{H/G} de même nature que la tension V_{C/B}, au coefficient du transformateur T₂ près. De la même façon, en raison du couplage électromagnétique entre les enroulements 11 et 3 (transformateur T₁), il apparaît entre les bornes F et H, une tension V_{F/H} de même nature que la tension V_{A/C}, au coefficient du transformateur T₁ près. Les transformateurs T₁ et T₂ sont choisis pour avoir un même rapport de transformation k. La tension secondaire E₂, qui est la somme des tensions V_{F/H} et V_{H/G}, correspond alors à une tension continue égale à k*E₁.

Le convertisseur 1 de la figure 1 assure donc une isolation galvanique et une transformation d'une tension continue en une tension continue.

En pratique, du fait du couplage entre les enroulements 6 et 13 du transformateur T₂, le circuit résonant parallèle 4 peut être constitué par des éléments capacitifs et/ou inductifs situés côté étage secondaire II. Ainsi, le circuit résonant parallèle 4 peut comprendre, côté secondaire, un condensateur 17 relié en parallèle de l'enroulement 13, en remplacement ou en complément du condensateur 5. De plus, le circuit résonant parallèle 4 peut comporter, côté primaire, une inductance additionnelle 18 reliée en parallèle de l'enroulement 6, et/ou côté secondaire, une inductance additionnelle 19 reliée en parallèle de l'enroulement 13.

Pour obtenir un bon rendement de conversion et limiter les pertes lors de la transformation de la tension primaire E₁ en la tension secondaire E₂, il convient de commander les interrupteurs 7, 8, 14 et 15 en alternance avec des rapports cycliques individuels de 50 %, en synchronisation avec la résonance du circuit 4. La réalisation d'un circuit adapté à mettre en oeuvre une telle séquence de commande des interrupteurs 7, 8, 14 et 15 peut poser problème.

La figure 2 est une reproduction de la figure 3 de la demande de brevet français FR2664777, et illustre une variante de réalisation du convertisseur 1 de la figure 1.

Dans l'exemple de la figure 2, chacun des interrupteurs 7, 8, 14 et 15 est formé par un transistor métal-oxyde à effet de champ dont la grille est commandée par un amplificateur 19 relié au drain du transistor placé dans la branche complémentaire de l'étage correspondant. Le convertisseur de la figure 2 forme ainsi un montage auto-oscillant. La commande des interrupteurs 7, 8, 14 et 15 est réalisée directement par un signal image du signal de sortie du circuit résonant parallèle 4, ce qui permet notamment de garantir la synchronisation de la commande des interrupteurs avec la résonance du circuit 4.

Un inconvénient du convertisseur de la figure 2 est qu'il reste relativement complexe, du fait notamment de la présence des amplificateurs 19. En particulier, les amplificateurs 19 doivent être alimentés, ce qui nécessite de prévoir des circuits d'alimentation spécifiques, et entraine en outre une consommation d'énergie électrique supplémentaire.

Il serait souhaitable de pouvoir disposer, dans un convertisseur à base de circuit résonant parallèle et de transformateurs du type décrit ci-dessus, d'un moyen de commande simple des interrupteurs 7 et 8 et/ou 14 et 15 en synchronisation avec la résonance du circuit parallèle.

### Résumé

Ainsi, un mode de réalisation prévoit un convertisseur adapté à assurer la transformation, avec isolement, d'une tension primaire en une tension secondaire, ce convertisseur comportant :
- un étage primaire relié à des premier et deuxième noeuds d'application de la tension primaire et comprenant :
   un premier enroulement ayant une première extrémité reliée au premier noeud ;
   un circuit résonant parallèle primaire relié à une deuxième extrémité du premier enroulement ;
   un deuxième enroulement monté en parallèle avec le circuit résonant parallèle primaire et formant le primaire d'un premier transformateur ; et
   des premier et deuxième interrupteurs primaires montés chacun en série avec une branche de sortie du circuit résonant parallèle primaire et reliant ladite branche de sortie au deuxième noeud,
- et un étage secondaire relié à des troisième et quatrième noeuds de fourniture de la tension secondaire et comprenant :
   un troisième enroulement ayant une première extrémité reliée au troisième noeud ; et
   un quatrième enroulement relié à une deuxième extrémité du troisième enroulement et formant le secondaire du premier transformateur,
   dans lequel le premier interrupteur primaire comprend des premier et deuxième transistors montés en série, et le deuxième interrupteur primaire comprend des troisième et quatrième transistors montés en série, les grilles des premier et troisième transistors étant reliées à un même noeud d'application d'une première tension de polarisation continue, la grille du deuxième transistor étant reliée au point milieu entre les troisième et quatrième transistors, et la grille du quatrième transistor étant reliée au point milieu entre les premier et deuxième transistors.

Selon un mode de réalisation, les premier et troisième enroulements forment respectivement le primaire et le secondaire d'un deuxième transformateur ayant sensiblement le même rapport de transformation k que le premier transformateur.

Selon un mode de réalisation, le convertisseur comporte en outre un cinquième enroulement ayant une première extrémité reliée au premier noeud et une deuxième extrémité reliée au circuit résonant parallèle primaire, et un sixième enroulement ayant une première extrémité reliée au troisième noeud et une deuxième extrémité reliée au quatrième enroulement.

Selon un mode de réalisation, les cinquième et sixième enroulements forment respectivement le primaire et le secondaire d'un troisième transformateur ayant sensiblement le même rapport de transformation que le premier transformateur.

Selon un mode de réalisation, l'étage secondaire comporte en outre :
un circuit résonant parallèle secondaire monté en parallèle avec le quatrième enroulement ; et
des premier et deuxième interrupteurs secondaires montés chacun en série avec une branche de sortie du circuit résonant parallèle secondaire et reliant ladite branche de sortie au quatrième noeud.

Selon un mode de réalisation, les premier et deuxième interrupteurs secondaires sont des interrupteurs non commandés, par exemple des diodes.

Selon un mode de réalisation, le premier interrupteur secondaire comprend des cinquième et sixième transistors montés en série, et le deuxième interrupteur secondaire comprend des septième et huitième transistors montés en série, les grilles des cinquième et septième transistors étant reliées à un même noeud d'application d'une deuxième tension de polarisation continue, la grille du sixième transistor étant reliée au point milieu entre les septième et huitième transistors, et la grille du huitième transistor étant reliée au point milieu entre les cinquième et sixième transistors.

Selon un mode de réalisation, le convertisseur comprend en outre un septième enroulement reliant le point milieu entre les premier et deuxième transistors au point milieu entre les troisième et quatrième transistors, et un huitième enroulement reliant le point milieu entre les cinquième et sixième transistors au point milieu entre les septième et huitième transistors, les septième et huitième enroulements formant respectivement le primaire et le secondaire d'un quatrième transformateur.

Selon un mode de réalisation, le convertisseur comprend un circuit de fourniture de la première tension de polarisation continue, ce circuit comprenant une résistance et une diode Zener montées en série entre les premier et deuxième noeuds d'application de la tension primaire.

Selon un mode de réalisation, le point milieu entre la résistance et la diode Zener est connecté au noeud d'application de la première tension de polarisation continue.

Selon un mode de réalisation, le point milieu entre la résistance et la diode Zener est relié au noeud d'application de la première tension de polarisation continue par l'intermédiaire d'un transistor MOS monté en source suiveuse.

Selon un mode de réalisation, le convertisseur comporte en outre un circuit d'écrêtage de la tension appliquée sur les grilles des deuxième et quatrième transistors.

Selon un mode de réalisation, le circuit d'écrêtage comprend une première diode reliant la grille du quatrième transistor au noeud d'application de la première tension de polarisation continue, et une deuxième diode reliant la grille du deuxième transistor au noeud d'application de la première tension de polarisation continue.

Selon un mode de réalisation, le convertisseur comporte en outre un deuxième étage secondaire relié à des cinquième et sixième noeuds de fourniture d'une deuxième tension secondaire et comprenant :
un neuvième enroulement ayant une première extrémité reliée au cinquième noeud ; et
un dixième enroulement relié à une deuxième extrémité du neuvième enroulement et formant un deuxième secondaire du premier transformateur.

Selon un mode de réalisation, le deuxième étage secondaire comporte en outre :
un deuxième circuit résonant parallèle secondaire monté en parallèle avec le dixième enroulement ; et
des troisième et quatrième interrupteurs secondaires montés chacun en série avec une branche de sortie du deuxième circuit résonant parallèle secondaire et reliant ladite branche de sortie au sixième noeud.

Un autre mode de réalisation prévoit un circuit comportant une pluralité de convertisseurs tels que définis ci-dessus, dans lequel :
les convertisseurs sont reliés en série par leurs premiers et deuxièmes noeuds et sont reliés en parallèle par leurs troisièmes et quatrièmes noeuds ; et
dans chaque convertisseur, le premier transformateur a un rapport de transformation sensiblement égal à 1.

Un autre mode de réalisation prévoit une batterie électrique comportant une pluralité de modules de stockage d'énergie électrique, et, relié à chaque module, un circuit de gestion d'énergie comportant :
un premier étage adapté à convertir une tension alternative appliquée entre des première et deuxième bornes du circuit en une première tension continue ; et
un deuxième étage adapté à assurer la transformation, avec isolement, de la première tension continue en d'une part une deuxième tension continue appliquée entre des troisième et quatrième bornes du circuit, avec un rapport de transformation k, et d'autre part une troisième tension continue appliquée entre des cinquième et sixième bornes du circuit, avec un rapport de transformation k', le deuxième étage étant en outre adapté à assurer la transformation, avec isolement, de la deuxième tension continue en la troisième tension continue avec un rapport de transformation de l'ordre de k'/k.

Selon un mode de réalisation, chaque circuit de gestion d'énergie a ses troisième et quatrième bornes connectées respectivement à une borne positive et à une borne négative du module auquel il est associé.

Selon un mode de réalisation, les différents circuits de gestion d'énergie sont connectés en série et/ou en parallèle via leurs cinquièmes et sixièmes bornes, entre une borne positive et une borne négative de fourniture d'une tension auxiliaire de la batterie.

Selon un mode de réalisation, les différents circuits de gestion d'énergie sont connectés en parallèle via leurs premières et deuxièmes bornes, entre des première et deuxième bornes d'application d'une tension alternative de recharge de la batterie.

Selon un mode de réalisation, chaque module comprend une pluralité d'accumulateurs électrochimiques reliés en série et/ou en parallèle.

Selon un mode de réalisation, les modules sont reliés en série entre une borne positive et une borne négative de la batterie.

Selon un mode de réalisation, dans chaque circuit de gestion, le premier étage comprend un convertisseur alternatif-continu régulé à absorption sinusoïdale de courant.

Selon un mode de réalisation, dans chaque circuit de gestion, le deuxième étage comprend un convertisseur continu-continu isolé comportant :
- un étage primaire relié à des premier et deuxième noeuds d'application de la première tension continue et comprenant :
   un premier enroulement ayant une première extrémité reliée au premier noeud ;
   un circuit résonant parallèle primaire relié à une deuxième extrémité du premier enroulement ;
      un deuxième enroulement monté en parallèle avec le circuit résonant parallèle primaire et formant le primaire d'un premier transformateur ; et
   des premier et deuxième interrupteurs primaires montés chacun en série avec une branche de sortie du circuit résonant parallèle primaire,
- un premier étage secondaire relié aux troisième et quatrième bornes du circuit de gestion et comprenant :
   un troisième enroulement ayant une première extrémité reliée à la troisième borne ;
   un quatrième enroulement relié à une deuxième extrémité du troisième enroulement et formant le secondaire du premier transformateur ; et
   des premier et deuxième interrupteurs secondaires montés chacun en série avec une extrémité du quatrième enroulement,
- et un deuxième étage secondaire relié aux cinquième et sixième bornes du circuit de gestion et comprenant :
   un septième enroulement ayant une première extrémité relié à la cinquième borne ;
   un huitième enroulement relié à une deuxième extrémité du septième enroulement et formant un deuxième secondaire du premier transformateur ; et
   des troisième et quatrième interrupteurs secondaires montés chacun en série avec une extrémité du huitième enroulement.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, précédemment décrite, est un schéma électrique d'un exemple d'un convertisseur DC-DC isolé ;
la figure 2, précédemment décrite est un schéma électrique illustrant une variante de réalisation du convertisseur de la figure 1 ;
la figure 3 est un schéma électrique illustrant un exemple d'un mode de réalisation d'un convertisseur DC-DC isolé ;
la figure 4 est un schéma électrique illustrant une variante de réalisation du convertisseur de la figure 3 ;
la figure 5 est un schéma électrique illustrant une autre variante de réalisation du convertisseur de la figure 3 ;
la figure 6 est un schéma électrique illustrant une autre variante de réalisation du convertisseur de la figure 3 ;
la figure 7 est un schéma électrique simplifié illustrant un assemblage de plusieurs convertisseurs élémentaires du type décrit en relation avec les figures 3, 4, 5 et 6 ;
la figure 8 est un schéma électrique illustrant un exemple d'un autre mode de réalisation d'un convertisseur DC-DC isolé ;
la figure 9 est schéma bloc d'un exemple d'un mode de réalisation d'un circuit de conversion d'énergie électrique ; et
la figure 10 est un schéma électrique simplifié d'un exemple d'un mode de réalisation d'une batterie électrique incluant un circuit de conversion d'énergie électrique du type décrit en relation avec la figure 9.

### Description détaillée

De mêmes éléments ont été désignés par de mêmes références aux différentes figures. Par souci de clarté, seuls les éléments qui sont utiles à la compréhension des modes de réalisation décrits ont été représentés et sont détaillés. En particulier, l'ensemble des applications possibles des convertisseurs DC-DC isolés du type décrit dans la présente demande n'a pas été détaillé, les modes de réalisation décrits étant compatibles avec les applications usuelles des convertisseurs DC-DC isolés. Dans la présente description, on utilise le terme "connecté" pour désigner une liaison électrique directe, sans composant électronique intermédiaire, par exemple au moyen d'une ou plusieurs pistes conductrices ou fils conducteurs, et le terme "couplé" ou le terme "relié", pour désigner une liaison électrique qui peut être directe (signifiant alors "connecté") ou indirecte (c'est-à-dire via un ou plusieurs composants intermédiaires). Sauf précision contraire, les expressions "approximativement", "sensiblement", et "de l'ordre de" signifient à 10 % près, de préférence à 5 % près.

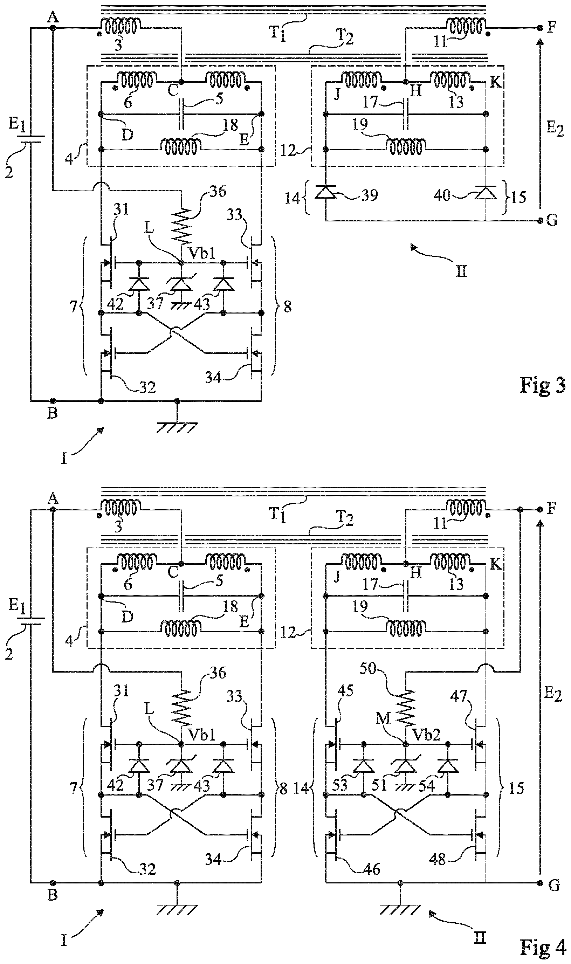

La figure 3 est un schéma électrique illustrant un exemple d'un mode de réalisation d'un convertisseur DC-DC isolé. Le convertisseur de la figure 3 comprend de nombreux éléments communs avec le convertisseur de la figure de la figure 1. Ces éléments ne seront pas détaillés à nouveau ci-après. Dans la suite, seules les différences avec le convertisseur de la figure 1 seront mises en exergue.

Dans l'exemple de la figure 3, l'interrupteur 7 comprend deux transistors 31 et 32 montés en série, et l'interrupteur 8 comprend deux transistors 33 et 34 montés en série. Dans l'exemple représenté, les transistors 31, 32, 33, 34 sont des transistors MOS à canal N. Le transistor 31 a son drain relié au noeud D et sa source reliée au drain du transistor 32, et la source du transistor 32 est reliée au noeud B. Le transistor 33 a son drain relié au noeud E et sa source reliée au drain du transistor 34, et la source du transistor 34 est reliée au noeud B.

Les grilles des transistors 31 et 33 sont reliées à un même noeud L d'application d'un potentiel de polarisation fixe Vb1. Dans l'exemple représenté, le potentiel Vb1 est généré par un circuit de polarisation comprenant une résistance 36 reliant le noeud L au noeud A, et une diode Zener 37 dont la cathode est reliée au noeud L et dont l'anode est reliée au noeud B. Ainsi, la tension polarisation continue Vb1 appliquée sur les grilles des transistors 31 et 33 (référencée par rapport au noeud B) est sensiblement égale à la tension d'avalanche de la diode Zener 37.

La grille ou noeud de commande du transistor 32 est reliée au point commun entre les transistors 33 et 34, c'est-à-dire au drain du transistor 34 dans cet exemple. La grille du transistor 34 est reliée au point commun entre les transistors 31 et 32, c'est-à-dire au drain du transistor 32 dans cet exemple.

Par ailleurs, dans cet exemple, les interrupteurs 14 et 15 sont des interrupteurs non commandés. L'interrupteur 14 est formé par une diode 39 dont l'anode est reliée au noeud G et dont la cathode est reliée au noeud J, et l'interrupteur 15 est formé par une diode 40 dont l'anode est reliée au noeud G et dont la cathode est reliée au noeud K.

Le fonctionnement du convertisseur de la figure 3 est le suivant. Quand l'interrupteur 7 conduit, la tension aux bornes de l'interrupteur 8 est une arche de sinusoïde d'amplitude n*E₁ au maximum. Lorsque la tension aux bornes de l'interrupteur 8 devient nulle, il convient de bloquer l'interrupteur 7 et de faire conduire l'interrupteur 8. Ceci est obtenu automatiquement par le fait que les transistors 31 et 33 sont pilotés par leurs sources, via les transistors 32 et 34. La tension de polarisation continue Vb1 appliquée sur les grilles des transistors 31 et 33 est choisie suffisamment élevée pour rendre les transistors 31 et 33 passants, c'est-à-dire qu'elle est choisie au minimum égale à la tension de seuil des transistors 31 et 33, tout en restant inférieure à la tension grille-source maximale nominale que peuvent supporter les transistors 31 et 33. A titre d'exemple, la tension Vb1 est comprise entre 10 et 20 volts, par exemple de l'ordre de 15 volts. La connexion des grilles des transistors 32 et 34 aux drains des transistors 34 et 32 respectivement, assure un fonctionnement en opposition de phase synchronisé sur la résonance du circuit 4. Lorsque la tension aux bornes du transistor 33 redescend puis atteint zéro, le drain du transistor 34 passe à une tension nulle, ce qui provoque le blocage du transistor 32, et donc du transistor 31. Le blocage du transistor 32 permet la mise en conduction du transistor 34, et donc du transistor 33.

Dans l'exemple de la figure 3, le convertisseur comprend en outre une diode 42 dont l'anode est reliée à la grille du transistor 34 et dont la cathode est reliée à la grille du transistor 31, et une diode 43 dont l'anode est reliée à la grille du transistor 32 et dont la cathode est reliée à la grille du transistor 33. Les diodes 42 et 43 permettent, en combinaison avec la diode Zener 37, d'écrêter les tensions de commande grille-source des deux transistors 32 et 34 afin de ne pas endommager les transistors 32 et 34. En effet, lorsque le transistor 31 (respectivement 33) est bloqué, la tension se répartit entre les transistors 31 et 32 (respectivement 33 et 34) en fonction principalement des capacités parasites de ces deux composants. Le drain du transistor 32 (respectivement 34), et donc la grille du transistor 34 (respectivement 32), peuvent alors être amenés à une tension supérieure la tension grille source maximale que peut supporter le transistor 34 (respectivement 32). A titre de variante, l'écrêtage des tensions de commande grille-source des transistors 32 et 34 peut être assuré par deux diodes Zener (non représentées), connectées respectivement entre la grille et la source du transistor 32 et entre la grille et la source du transistor 34, ou connectées respectivement entre le drain et la source du transistor 32 et entre le drain et la source du transistor 34.

Ainsi, le convertisseur de la figure 3 forme un montage auto-oscillant particulièrement simple, permettant de garantir une commande en alternance des interrupteurs 7 et 8 d'une part et 14 et 15 d'autre part, avec des rapports cycliques individuels de 50 %, en synchronisation avec la résonance du circuit 4.

On notera que dans l'exemple de la figure 3, les interrupteurs 14 et 15 sont des interrupteurs non commandés, dont la commutation en synchronisation avec les interrupteurs 7 et 8 est assurée du fait du couplage électromagnétique entre l'étage primaire I et l'étage secondaire II. Ceci permet de simplifier l'architecture du circuit mais rend en contrepartie le convertisseur de la figure 3 unidirectionnel.

La figure 4 est un schéma électrique illustrant une variante de réalisation bidirectionnelle ou réversible du convertisseur de la figure 3.

Le convertisseur de la figure 4 diffère du convertisseur de la figure 3 en ce que, dans l'exemple de la figure 4, les interrupteurs 14 et 15 de l'étage secondaire II sont des interrupteurs commandés similaires ou identiques aux interrupteurs 7 et 8 de l'étage primaire I, montés sensiblement de la même manière que les interrupteurs 7 et 8 de l'étage primaire I.

Plus particulièrement, l'interrupteur 14 comprend deux transistors 45 et 46 montés en série, et l'interrupteur 15 comprend deux transistors 47 et 48 montés en série. Les transistors 45, 46, 47, 48 sont par exemple des transistors MOS à canal N. Le transistor 45 a son drain relié au noeud J et sa source reliée au drain du transistor 46, et la source du transistor 46 est reliée au noeud G. Le transistor 47 a son drain relié au noeud K et sa source reliée au drain du transistor 48, et la source du transistor 48 est reliée au noeud G.

Les grilles des transistors 45 et 47 sont reliées à un même noeud M d'application d'un potentiel de polarisation fixe Vb2. Dans l'exemple représenté, le potentiel Vb2 est généré par un circuit de polarisation comprenant une résistance 50 reliant le noeud M au noeud F, et une diode Zener 51 dont la cathode est reliée au noeud M et dont l'anode est reliée au noeud G. Ainsi, la tension de polarisation continue Vb2 appliquée sur les grilles des transistors 45 et 47 (référencée par rapport au noeud G) est sensiblement égale à la tension d'avalanche de la diode Zener 51.

La grille du transistor 46 est reliée au point commun entre les transistors 47 et 48, c'est-à-dire au drain du transistor 48 dans cet exemple. La grille du transistor 48 est reliée au point commun entre les transistors 45 et 46, c'est-à-dire drain du transistor 46 dans cet exemple.

Par ailleurs, dans l'exemple de la figure 4, le convertisseur comprend en outre une diode 53 dont l'anode est reliée à la grille du transistor 48 et dont la cathode est reliée à la grille du transistor 45, et une diode 54 dont l'anode est reliée à la grille du transistor 46 et dont la cathode est reliée à la grille du transistor 47.

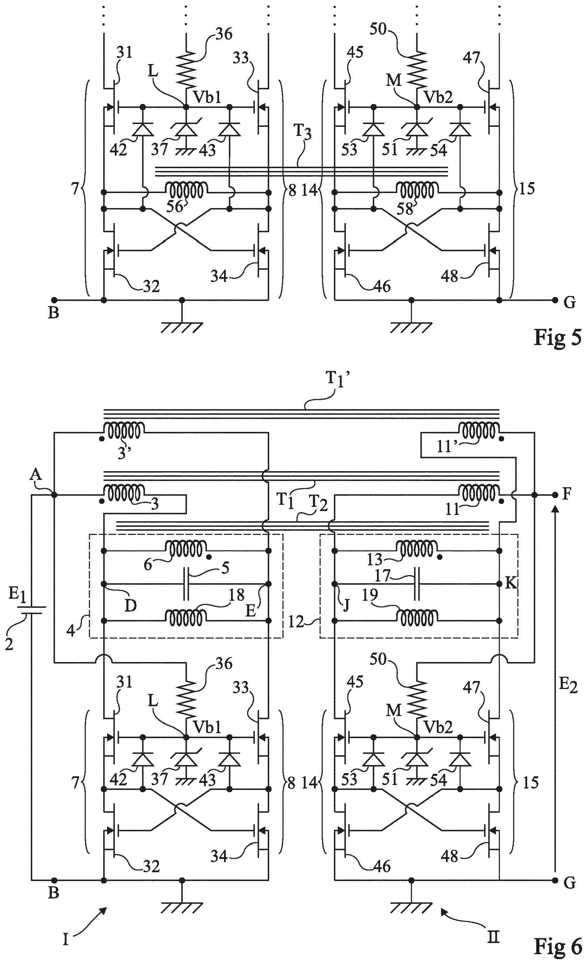

La figure 5 est un schéma électrique illustrant une autre variante de réalisation du convertisseur de la figure 3. Le convertisseur de la figure 5 est un convertisseur bidirectionnel comprenant les mêmes éléments que le convertisseur de la figure 4, agencés sensiblement de la même manière. Par souci de simplification, les transformateurs T₁ et T₂, la source de tension continue 2 et les circuits parallèles 4 et 12 n'ont pas été représentés sur la figure 5.

Le convertisseur de la figure 5 diffère du convertisseur de la figure 4 en ce qu'il comprend en outre un troisième transformateur T₃ comprenant un enroulement primaire 56 reliant le point commun entre les transistors 31 et 32 au point commun entre les transistors 33 et 34, et un enroulement secondaire 58 reliant le point commun entre les transistors 45 et 46 au point commun entre les transistors 47 et 48.

Le transformateur T₃ permet d'améliorer encore la synchronisation des commutations des interrupteurs entre l'étage primaire I et l'étage secondaire II du convertisseur.

La figure 6 est un schéma électrique illustrant une autre variante de réalisation du convertisseur de la figure 3. Le convertisseur de la figure 6 est un convertisseur bidirectionnel comprenant les mêmes éléments que le convertisseur de la figure 4, agencés sensiblement de la même manière. Le convertisseur de la figure 6 diffère du convertisseur de la figure 4 en ce que, dans le convertisseur de la figure 6, l'extrémité de l'enroulement 3 opposée au noeud A est connectée non pas à un point milieu de l'enroulement 6, mais à l'extrémité D de l'enroulement 6. De plus, dans le convertisseur de la figure 6, l'extrémité de l'enroulement 11 opposée au noeud F est connectée non pas à un point milieu de l'enroulement 13 mais à l'extrémité J de l'enroulement 13. Le convertisseur de la figure 6 comprend en outre un troisième transformateur T1' comprenant un enroulement primaire 3', par exemple identique à l'enroulement 3, et un enroulement secondaire 11', par exemple identique à l'enroulement 11, couplé à l'enroulement 3'. L'enroulement 3' a une première extrémité connectée au noeud A, et une deuxième extrémité connectée à l'extrémité E de l'enroulement 6. L'enroulement 11' a une première extrémité connectée au noeud F, et une deuxième extrémité connectée à l'extrémité K de l'enroulement 13.

Le convertisseur de la figure 6 fonctionne sensiblement de la même manière que le convertisseur de la figure 4, un avantage étant que les enroulements 6 et 13 n'ont plus besoin de comporter une borne de connexion à un point milieu de l'enroulement, ce qui facilite leur réalisation.

L'homme du métier saura adapter la variante de la figure 6 au convertisseur unidirectionnel de la figure 3. De plus, les variantes de réalisation des figures 5 et 6 peuvent être combinées.

Diverses variantes et modifications des convertisseurs DC-DC isolés décrits en relation avec les figures 3, 4, 5 et 6 apparaîtront à l'homme de l'art. En particulier, les modes de réalisation décrits ne se limitent pas aux exemples susmentionnés de réalisation des circuits de fourniture des tensions de polarisation continues Vb1 et Vb2. A titre de variante, au lieu que le point commun entre la résistance 36 et la diode Zener 37 soit relié directement au noeud L, le circuit de fourniture de la tension Vb1 peut comprendre un transistor MOS d'amplification monté en source suiveuse dont la grille est reliée au point milieu entre la résistance 36 et la diode Zener 37, dont le drain est relié au noeud A, et dont la source est reliée au noeud L. Le noeud L voit alors une tension qui est une image amplifiée, apte à fournir un niveau de courant supérieur, de la tension sur le point milieu entre la résistance 36 et la diode Zener 37. Un montage similaire peut être utilisé côté étage secondaire dans les exemples des figures 4 et 5. Plus généralement, tout autre circuit adapté à appliquer une tension de polarisation fixe sur les grilles des transistors 32 et 34, et/ou 46 et 48, peut être utilisé.

En outre, les modes de réalisation décrits ne se limitent pas aux exemples susmentionnés dans lesquels les inductances 3 et 11 (et le cas échéant 3' et 11') sont couplées de façon à former un transformateur. A titre de variante, les inductances 3 et 11 (et le cas échéant 3' et 11') peuvent ne pas être couplées. Dans ce cas, les inductances 3 et 11 (et le cas échéant 3' et 11') doivent être dimensionnées pour stocker de l'énergie, le transfert entre les enroulements 3 et 11 (et le cas échéant 3' et 11') n'étant plus instantané. A titre d'exemple, chacune des inductances 3 et 11 (et le cas échéant 3' et 11') peut être munie d'un entrefer. On notera que lorsque les inductances 3 et 11 (et le cas échéant 3' et 11') ne sont pas couplées, le rapport entre le nombre de spires de l'inductance 11 (respectivement 11') et le nombre de spires de l'inductance 3 (respectivement 3') peut être différent du rapport k entre le nombre de spires de l'inductance 13 et le nombre de spires de l'inductance 6.

De plus, les modes de réalisation décrits ne se limitent pas aux exemples susmentionnés dans lesquels les transistors 31, 32, 33, 34, et 45, 46, 47, 48 sont des transistors MOS. Plus généralement, tout autre type de transistor peut être utilisé, par exemple des transistors IGBT, jFET ou HEMT, des transistors au SiC ou au GaN, etc. On notera que côté primaire, les transistors 31 et 33 sont soumis à des tensions drain-source pouvant atteindre n*E₁, et que, côté secondaire, les transistors 45 et 47 sont soumis à des tensions drain-source pouvant atteindre n*E₂. Les transistors 32 et 34, respectivement 46 et 48, voient quant à eux des tensions maximales limitées à Vb1, respectivement Vb2, du fait de la présence des diodes 42, 43, respectivement 53, 54. Le dimensionnement des transistors est réalisé en conséquence en tenant compte des plages de tension de fonctionnement dans lesquelles le convertisseur est destiné à être utilisé.

Par ailleurs, pour obtenir un convertisseur à très haute fréquence de découpage, par exemple supérieure à 1 MHz, tout en limitant les courants parasites perturbateurs entre primaire et secondaire, on peut réaliser une association série-parallèle de plusieurs convertisseurs élémentaires du type décrit en relation avec les figures 3, 4, 5 et 6, présentant un rapport de transformation k=1. A titre d'exemple, les convertisseurs peuvent être reliés en série par leurs noeuds d'entrée A et B, et en parallèle par leurs noeuds de sortie F et G. Les variations de tension étant identiques entre les enroulements primaires et secondaires du fait du rapport de transformation k=1, les courants perturbateurs de mode commun sont réduits. Les enroulements 3 et 11 (et le cas échéant 3' et 11') d'une part, et 6 et 13 d'autre part sont par exemple bobinés de façon que chaque spire primaire soit en vis-à-vis de la spire secondaire de même potentiel.

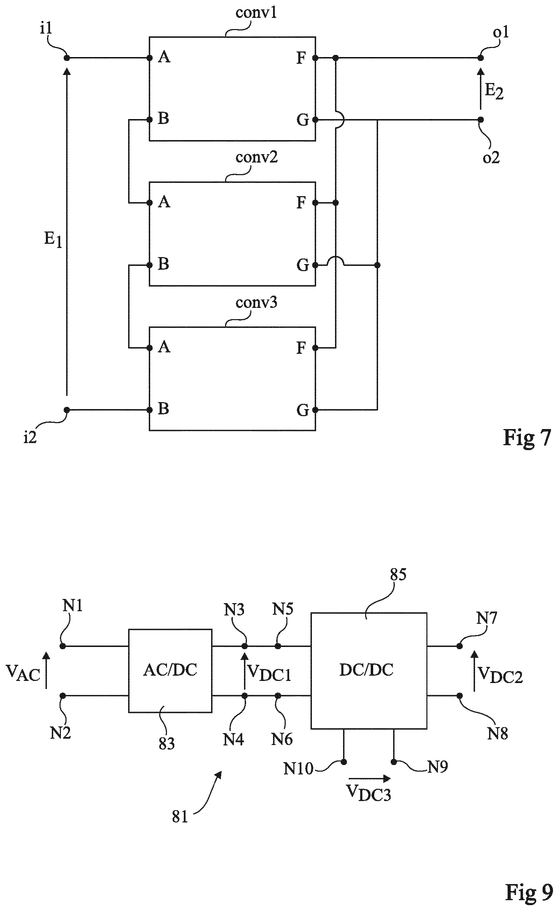

La figure 7 est un schéma électrique simplifié illustrant une telle configuration. Le convertisseur de la figure 7 comprend trois convertisseurs élémentaires conv1, conv2, conv3 identiques ou similaires, du type décrit en relation avec les figures 3, 4, 5 et 6. Sur la figure 7, les convertisseurs élémentaires conv1, conv2, conv3 sont représentés sous forme de blocs. Seuls les noeuds d'entrée/sortie A, B, F et G des convertisseurs élémentaires ont été détaillés. Les convertisseurs élémentaires conv1, conv2, conv3 sont reliés en série par leurs noeuds d'entrée A et B, et en parallèle par leurs noeuds de sortie F et G. Plus particulièrement, le noeud A du convertisseur élémentaires conv1 est relié à une borne d'entrée il du convertisseur, le noeud B du convertisseur élémentaire conv1 est relié au noeud A du convertisseur élémentaire conv2, le noeud B du convertisseur élémentaire conv2 est relié au noeud A du convertisseur élémentaire conv3, et le noeud B du convertisseur élémentaire conv3 est relié à une borne d'entrée i2 du convertisseur. De plus, les noeuds F des convertisseurs élémentaires conv1, conv2, conv3 sont reliés à une même borne de sortie o1 du convertisseur, et les noeuds G des convertisseurs élémentaires conv1, conv2, conv3 sont reliés à une même borne de sortie o2 du convertisseur. La tension d'entrée E₁ du convertisseur de la figure 7 est appliquée entre les bornes il et i2, et la tension de sortie E₂ du convertisseur de la figure 7 est délivrée entre les bornes o1 et o2.

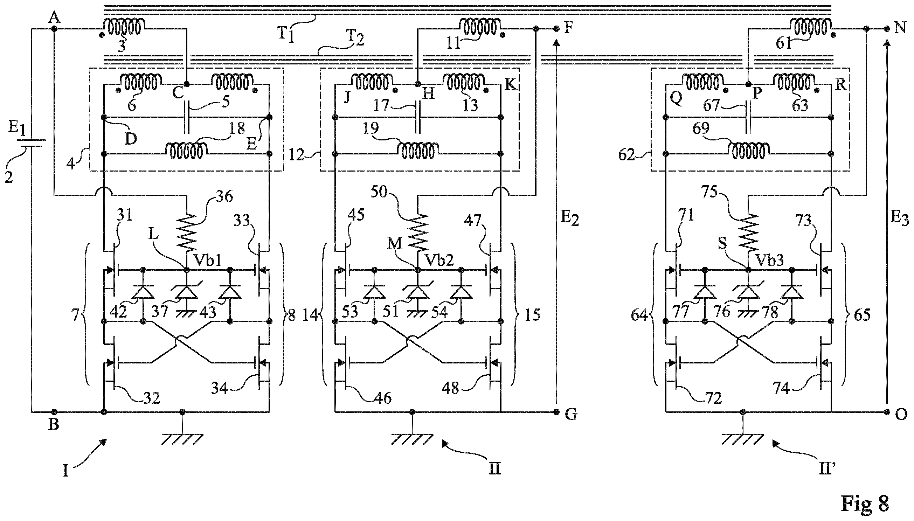

La figure 8 est un schéma électrique illustrant un exemple d'un autre mode de réalisation d'un convertisseur DC-DC isolé. Le convertisseur de la figure 8 diffère des exemples décrits précédemment en ce qu'il comprend non pas un unique étage secondaire II, mais deux étages secondaires II et II'. Ainsi, le convertisseur de la figure 8 permet de réaliser la transformation, avec isolement, d'une tension continue primaire E₁ en deux tensions continues secondaires E₂ et E₃.

Dans l'exemple de la figure 8, les étages primaire I et secondaire II comprennent les mêmes éléments que dans l'exemple de la figure 4, agencés sensiblement de la même manière que dans l'exemple de la figure 4.

L'étage secondaire II' est relié entre des bornes N et O de fourniture de la tension continue E₃. L'étage secondaire II' comprend un enroulement secondaire 61, par exemple couplé à l'enroulement primaire 3 et à l'enroulement secondaire 11 du transformateur T₁ de façon à constituer un deuxième secondaire du transformateur T₁. Dans cet exemple, le transformateur T₁ est agencé de manière que le signal délivré par l'enroulement secondaire 61 se trouve en phase par rapport au signal engendré par l'enroulement primaire 3. L'enroulement 61 est monté en série avec un circuit parallèle 62 comportant au moins un enroulement secondaire 63 présentant un point milieu P relié à une extrémité de l'enroulement 61, l'autre extrémité de l'enroulement 61 étant reliée à la borne N. L'enroulement 63 est couplé à l'enroulement primaire 6 et à l'enroulement secondaire 13 du transformateur T₂, et constitue un deuxième secondaire du transformateur T₂. Dans cet exemple, le transformateur T₂ est agencé de sorte que le signal délivré par l'enroulement 63 soit en phase avec celui engendré par l'enroulement 6. On désigne par Q et R les extrémités de l'enroulement 63. Le circuit parallèle 62 peut en outre comporter, en parallèle de l'enroulement 63, des éléments capacitif 67 et/ou inductif 69 du circuit résonant parallèle 4 du convertisseur. Le circuit parallèle 62 comporte en outre un interrupteur 64 reliant le noeud Q au noeud O, et un interrupteur 65 reliant le noeud R au noeud O. Dans cet exemple, les interrupteurs 64 et 65 de l'étage secondaire II' sont des interrupteurs commandés et sont similaires ou identiques aux interrupteurs 7 et 8 de l'étage primaire I, et montés sensiblement de la même manière que les interrupteurs 7 et 8 de l'étage primaire I. Plus particulièrement, l'interrupteur 64 comprend deux transistors 71 et 72 montés en série entre les noeuds Q et O, et l'interrupteur 65 comprend deux transistors 73 et 74 montés en série entre les noeuds R et O. Les grilles des transistors 71 et 73 sont reliées à un même noeud S d'application d'un potentiel de polarisation fixe Vb3. Dans l'exemple représenté, le potentiel Vb3 est généré par un circuit de polarisation comprenant une résistance 75 reliant le noeud S au noeud N, et une diode Zener 76 dont la cathode est reliée au noeud S et dont l'anode est reliée au noeud O. De plus, la grille du transistor 72 est reliée au point commun entre les transistors 73 et 74, et la grille du transistor 74 est reliée au point commun entre les transistors 71 et 72. Le convertisseur comprend en outre une diode 77 dont l'anode est reliée à la grille du transistor 74 et dont la cathode est reliée à la grille du transistor 71, et une diode 78 dont l'anode est reliée à la grille du transistor 72 et dont la cathode est reliée à la grille du transistor 73.

Si on désigne par k le rapport de transformation du convertisseur entre l'étage primaire I et l'étage secondaire II (rapport entre le nombre de spires de l'enroulement 13 et le nombre de spires de l'enroulement 6 d'une part, et entre le nombre de spires de l'enroulement 11 et le nombre de spires de l'enroulement 3 d'autre part), et par k' le rapport de transformation du convertisseur entre l'étage primaire I et l'étage secondaire II' (rapport entre le nombre de spires de l'enroulement 63 et le nombre de spires de l'enroulement 6 d'une part, et entre le nombre de spires de l'enroulement 61 et le nombre de spires de l'enroulement 3 d'autre part), la tension E₂ est égale à k*E₁, et la tension E₃ est égale à k'*E₁. Dans l'exemple de la figure 8, les interrupteurs 14, 15, 64 et 65 des étages secondaires II et II' étant commandés et similaires aux interrupteurs 7 et 8 de l'étage primaire I, le convertisseur est réversible. Ainsi, la tension d'entrée à convertir peut être appliquée entre les noeuds F et G ou entre les noeuds N et O. Le rapport de transformation du convertisseur entre l'étage secondaire II et l'étage secondaire II' est alors sensiblement égal à k'/k.

Plus généralement, tout convertisseur DC-DC isolé, réversible ou non, basé sur l'utilisation d'un circuit résonant parallèle et d'un ou plusieurs transformateurs, par exemple des convertisseurs du type décrit en relation avec les figures 3, 5 et 6 ou des convertisseurs du type décrit dans la demande de brevet FR2664777, peut être décliné en un convertisseur à 3 voies en appliquant l'enseignement décrit en relation avec la figure 8.

### Application aux batteries électriques

Une application particulièrement intéressante du convertisseur DC-DC isolé réversible à trois voies du type décrit en relation avec la figure 8 concerne le domaine des batteries électriques, et, plus particulièrement, celui des batteries pour véhicules à propulsion électrique.

Une batterie pour véhicule électrique comprend classiquement un ou plusieurs modules de stockage d'énergie électrique, par exemple identiques ou similaires, reliés en série entre des bornes principales de la batterie, et des circuits de gestion d'énergie adaptés à mettre en oeuvre les fonctions suivantes :
conversion d'une tension alternative sinusoïdale en une tension continue appliquée entre les bornes principales de la batterie pour les opérations de recharge de la batterie ;
conversion de la tension continue fournie entre les bornes principales de la batterie en une tension continue auxiliaire appliquée entre des bornes de fourniture d'une tension auxiliaire de la batterie ; et
onduleur pour alimenter le moteur électrique du véhicule à partir de la tension continue fournie entre les bornes principales de la batterie.

Les circuits de gestion d'énergie sont généralement dimensionnés spécifiquement pour une batterie donnée et pour une application donnée, ce qui oblige à concevoir de nouveaux circuits de gestion d'énergie pour chaque nouvelle application.

Selon un aspect d'un mode de réalisation, on prévoit une batterie dans laquelle chaque module de stockage d'énergie électrique dispose de son propre circuit de gestion d'énergie élémentaire adapté à mettre en oeuvre les fonctions suivantes :
conversion de la tension alternative sinusoïdale de recharge (par exemple la tension secteur) en une première tension continue ; et
conversion de la première tension continue en d'une part une deuxième tension continue appliquée entre une borne positive et une borne négative de fourniture d'une tension principale du module, avec un rapport de transformation k, et d'autre part une troisième tension continue appliquée entre une borne positive et une borne négative de fourniture d'une tension auxiliaire du module, avec un rapport de transformation k', par exemple différent de k, et conversion de la deuxième tension continue en la troisième tension continue, avec un rapport de transformation de l'ordre de k'/k.

Pour mettre en oeuvre les fonctions de conversion DC-DC, chaque circuit de gestion d'énergie élémentaire comprend par exemple un convertisseur DC-DC isolé réversible à trois voies, par exemple du type décrit en relation avec la figure 8.

La figure 9 est un schéma bloc d'un exemple d'un mode de réalisation d'un circuit de gestion d'énergie élémentaire 81 adapté à mettre en oeuvre les fonctions susmentionnées.

Le circuit 81 de la figure 9 comprends un premier étage 83 (AC/DC) adapté à convertir une tension alternative V_{AC}, par exemple la tension secteur, appliqué entre des bornes N1 et N2 de l'étage, en une première tension continue V_{DC1} fournie entre des bornes N3 et N4 de l'étage. L'étage 83 est par exemple un convertisseur à absorption sinusoïdale de courant. L'étage 83 est de préférence adapté à réguler le courant de charge prélevé sur le réseau.

Le circuit 81 de la figure 9 comprend en outre un deuxième étage 85 (DC/DC) comprenant des bornes N5 et N6 reliées respectivement aux bornes de sortie N3 et N4 de l'étage 83. L'étage 85 est adapté à convertir la tension continue V_{DC1} appliquée entre ses bornes N5 et N6 en une tension continue V_{DC2} fournie entre des bornes N7 et N8 de l'étage, avec un rapport de transformation k, et en une tension continue V_{DC3} fournie entre des bornes N9 et N10 de l'étage, avec un rapport de transformation k'. L'étage 85 est en outre adapté à convertir une tension continue appliquée entre ses bornes N7 et N8 en une tension continue fournie entre ses bornes N9 et N10, avec un rapport de transformation de l'ordre de k'/k. L'étage 85 est par exemple un convertisseur DC/DC isolé réversible à trois voies du type décrit en relation avec la figure 8, les bornes N5, N6, N7, N8, N9 et N10 correspondant alors respectivement aux bornes A, B, F, G, N et O du circuit de la figure 8. Plus généralement, tout autre convertisseur continu-continu isolé réversible à trois voies adapté à convertir la tension continue V_{DC1} appliquée entre ses bornes N5 et N6 en une tension continue V_{DC2} fournie entre des bornes N7 et N8 de l'étage, avec un rapport de transformation k fixe, et en une tension continue V_{DC3} fournie entre des bornes N9 et N10 de l'étage, avec un rapport de transformation k' fixe, de manière préférée basé sur l'utilisation d'un circuit résonant et d'un ou plusieurs transformateurs, peut être utilisé pour réaliser l'étage 85.

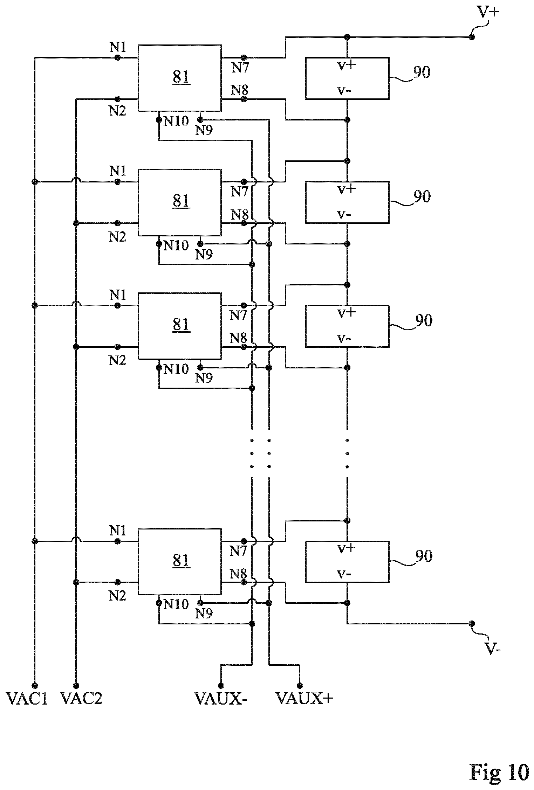

La figure 10 est un schéma électrique simplifié d'un exemple d'un mode de réalisation d'une batterie électrique incluant des circuits de gestion d'énergie électrique élémentaires du type décrit en relation avec la figure 9.

La batterie électrique de la figure 10 comprend une pluralité de modules de stockage d'énergie électrique 90, par exemple identiques ou similaires. Chaque module élémentaire 90 comprend par exemple plusieurs accumulateurs électrochimiques reliés en série et/ou en parallèle entre une borne négative principale v- et une borne positive principale v+ du module. Les modules 90 sont reliés en série via leurs bornes v- et v+ entre une borne principale négative V- et une borne principale positive V+ de la batterie.

La batterie de la figure 10 comprend en outre, relié à chacun des modules 90, un circuit de gestion d'énergie 81 du type décrit en relation avec la figure 9. Les circuits de gestion d'énergie 81 sont par exemple identiques ou similaires.

Les circuits 81 sont connectés en parallèle via leurs bornes d'entrée alternative N1 et N2, c'est-à-dire que les bornes N1 des différents circuits 81 sont connectées à une même première borne VAC1 d'application d'une tension alternative de recharge de la batterie, et que les bornes N2 des différents circuits 81 sont connectées à une même deuxième borne VAC2 d'application de la tension alternative de recharge de la batterie.

Chacun des circuits 81 a ses bornes de sortie continue N7 et N8 connectées respectivement aux bornes v+ et v- du module 90 auquel il est associé.

Dans cet exemple, les circuits 81 sont en outre connectés en parallèle via leurs bornes de sortie continue N9 et N10, c'est-à-dire que les bornes N9 des circuits 81 sont connectées à une même première borne VAUX+ de fourniture d'une tension auxiliaire de la batterie, et que les bornes N10 des circuits 81 sont connectées à une même deuxième borne VAUX- de fourniture de la tension auxiliaire.

On notera que compte tenu de ce qui a été décrit ci-dessus à propos de la structure du convertisseur utilisé pour réaliser l'étage de conversion continu-continu 85 du circuit 81, et en particulier du fait que le convertisseur présente des rapports de transformation k et k' fixes, la tension auxiliaire fournie entre les bornes N10 et N9 de chaque circuit 81 est proportionnelle à la tension du module 90 connecté entre les bornes N7 et N8 du circuit, et suit donc les variations de la tension du module 90. Ceci constitue une différence par rapport aux systèmes utilisant des convertisseurs DC/DC régulés en tension, dans lesquels la tension auxiliaire est constante et indépendante de la tension aux bornes des modules de la batterie.

Un avantage de la batterie de la figure 10 réside dans sa modularité qui permet aisément d'ajouter, de retirer, ou de désactiver un ou plusieurs modules de stockage 90 et leurs circuits de gestion d'énergie 81, sans effort de conception supplémentaire.

Un autre avantage réside dans la forte disponibilité de la tension auxiliaire de la batterie, résultant du fait que la tension auxiliaire est produite en parallèle par l'ensemble des circuits 81, à partir des tensions principales délivrées par les différents modules de stockage 90.

Un autre avantage, lié à l'utilisation de transformateurs pour réaliser l'étage de conversion continu-continu 85 du circuit 81, est que les convertisseurs peuvent aisément absorber des surintensités transitoires importantes. Une simple protection par fusible peut être prévue, par exemple du côté de la sortie de fourniture de la tension auxiliaire.

Le câblage des bornes de sortie auxiliaire N9 et N10 des différents circuits de gestion 81 peut être adapté en fonction des besoins de l'application. A titre d'exemple, si chaque circuit de gestion 81 produit une tension auxiliaire de l'ordre de 12V, les circuits de gestion 81 peuvent être reliés deux à deux en série via leurs bornes de sortie auxiliaire N9 et N10 pour générer une tension auxiliaire de l'ordre de 24V. D'autres modes de connexion sont possibles pour générer une ou plusieurs tensions auxiliaires.

Par ailleurs, le câblage des bornes d'entrée alternative N1 et N2 des différents circuits de gestion 81 peut être adapté en fonction de l'application. A titre d'exemple, des circuits de gestion 81 distincts peuvent avoir leurs bornes N1 et N2 connectées à des bornes d'application de tensions alternatives distinctes, correspondant par exemple à différentes phases d'une alimentation polyphasée.

## Revendications

1. Batterie électrique comportant une pluralité de modules (90) de stockage d'énergie électrique, chaque module comportant une borne négative (v-) et une borne positive (v+) et les modules étant reliés en série entre une borne négative (V-) et une borne positive (V+) de la batterie, et, associé à chaque module (90), un circuit de gestion d'énergie (81) comportant un premier étage (83) comprenant des première (N1), deuxième (N2), troisième (N3) et quatrième (N4) bornes, et un deuxième étage (85) comprenant des cinquième (N5), sixième (N6), septième (N7), huitième (N8), neuvième (N9) et dixième (N10) bornes, dans laquelle :
chaque circuit de gestion (81) a ses troisième (N3) et quatrième (N4) bornes connectées respectivement à ses cinquième (N5) et sixième (N6) bornes ;
chaque circuit de gestion (81) a ses septième (N7) et huitième (N8) bornes connectées respectivement à la borne positive (v+) et à la borne négative (v-) du module (90) auquel il est associé ;
les premières bornes (N1) des différents circuits de gestion (81) sont connectées à une même première borne (VAC1) d'application d'une tension alternative de recharge de la batterie ;
les deuxièmes bornes (N2) des différents circuits de gestion (81) sont connectées à une même deuxième borne (VAC1) d'application de la tension alternative de recharge de la batterie ;
les neuvièmes bornes (N9) des différents circuits de gestion (81) sont connectées à une même première borne (VAUX+) de fourniture d'une tension auxiliaire de la batterie ;
les dixièmes bornes (N9) des différents circuits de gestion (81) sont connectées à une même deuxième borne (VAUX-) de fourniture de la tension auxiliaire de la batterie ; et
dans chaque circuit de gestion (81), le premier étage (83) est adapté à convertir une tension alternative de recharge (V_{AC}) appliquée entre les première (N1) et deuxième (N2) bornes du circuit en une première tension continue (V_{DC1}) appliquée entre les troisième (N3) et quatrième (N4) bornes du circuit, et le deuxième étage (85) est adapté à assurer la transformation, avec isolement, de la première tension continue (V_{DC1}) en d'une part une deuxième tension continue (V_{DC2}) appliquée entre les septième (N7) et huitième (N8) bornes du circuit, avec un rapport de transformation k, et d'autre part une troisième tension continue (V_{DC3}) appliquée entre les neuvième (N9) et dixième (N10) bornes du circuit, avec un rapport de transformation k', le deuxième étage étant en outre adapté à assurer la transformation, avec isolement, de la deuxième tension continue (V_{DC2}) en la troisième tension continue (V_{DC3}) avec un rapport de transformation de l'ordre de k'/k.

2. Batterie selon la revendication 1, dans laquelle, dans chaque circuit de gestion (81), le deuxième étage (85) comprend un convertisseur continu-continu isolé comportant :
- un étage primaire (I) comprenant :
un premier enroulement (3) ayant une première extrémité reliée à la cinquième borne (N5) du circuit de gestion ;
un circuit résonant parallèle primaire (4) relié à une deuxième extrémité du premier enroulement (3) ;
un deuxième enroulement (6) monté en parallèle avec le circuit résonant parallèle primaire (4) et formant le primaire d'un premier transformateur (T₂) ; et
des premier (7) et deuxième (8) interrupteurs primaires reliant chacun une branche de sortie du circuit résonant parallèle primaire (4) à la sixième borne (N6) du circuit de gestion,
- un premier étage secondaire (II) comprenant :
un troisième enroulement (11) ayant une première extrémité reliée à la septième borne (N7) du circuit de gestion ;
un quatrième enroulement (13) relié à une deuxième extrémité du troisième enroulement (11) et formant le secondaire du premier transformateur (T₂) ; et
des premier (14) et deuxième (15) interrupteurs secondaires reliant chacun une extrémité du quatrième enroulement (13) à la huitième borne (N8) du circuit de gestion,
- et un deuxième étage secondaire (II') comprenant :
un septième enroulement (61) ayant une première extrémité reliée à la neuvième borne (N9) du circuit de gestion ;
un huitième enroulement (63) relié à une deuxième extrémité du septième enroulement (61) et formant un deuxième secondaire du premier transformateur (T₂) ; et
des troisième (64) et quatrième (65) interrupteurs secondaires reliant chacun une extrémité du huitième enroulement (63) à la dixième borne (N10) du circuit de gestion.

3. Batterie selon la revendication 2, dans laquelle, dans chaque circuit de gestion (81), le deuxième étage (85) comprend des moyens de commande adaptés à assurer alternativement, pendant une première phase, l'ouverture du premier interrupteur primaire (7) et des premier (14) et troisième (64) interrupteurs secondaires et la fermeture du deuxième interrupteur primaire (8) et des deuxième (15) et quatrième (65) interrupteurs secondaires, et, pendant une deuxième phase, la fermeture du premier interrupteur primaire (7) et des premier (14) et troisième (64) interrupteurs secondaires et l'ouverture du deuxième interrupteur primaire (8) et des deuxième (15) et quatrième (65) interrupteurs secondaires.

4. Batterie selon l'une quelconque des revendications 1 à 3, dans laquelle chaque module (90) comprend une pluralité d'accumulateurs électrochimiques reliés en série et/ou en parallèle entre la borne négative (v-) et la borne positive (v+) du module.

5. Batterie selon l'une quelconque des revendications 1 à 4, dans laquelle, dans chaque circuit de gestion (81), le premier étage (83) comprend un convertisseur alternatif-continu régulé à absorption sinusoïdale de courant.

## Patentansprüche

1. Elektrische Batterie mit einer Vielzahl von elektrischen Energiespeichermodulen (90), wobei jedes Modul einen negativen Anschluss (v-) und einen positiven Anschluss (v+) aufweist und die Module zwischen einem negativen Anschluss (V-) und einem positiven Anschluss (V+) der Batterie in Reihe geschaltet sind, und mit einer Leistungsverwaltungsschaltung (81), die jedem Modul (90) zugeordnet ist und die eine erste Stufe (83) mit einem ersten (N1), zweiten (N2), dritten (N3) und vierten (N4) Anschluss und eine zweite Stufe (85) mit einem fünften (N5), sechsten (N6), siebten (N7), achten (N8), neunten (N9) und zehnten (N10) Anschluss aufweist, wobei:
jede Verwaltungsschaltung (81) ihre dritten (N3) und vierten (N4) Anschlüsse jeweils mit ihren fünften (N5) und sechsten (N6) Anschlüssen verbunden hat;
jede Verwaltungsschaltung (81) ihre siebten (N7) und achten (N8) Anschlüsse mit dem positiven Anschluss (v+) bzw. mit dem negativen Anschluss (v-) des Moduls (90), dem sie zugeordnet ist, verbunden hat;
die ersten Anschlüsse (N1) der verschiedenen Verwaltungsschaltungen (81) mit einem gleichen ersten Anschluss (VAC1) zum Anlegen einer AC-Batterieladespannung verbunden sind;
die zweiten Anschlüsse (N2) der verschiedenen Verwaltungsschaltungen (81) mit einem gleichen zweiten Anschluss (VAC1) zum Anlegen der AC-Batterieladespannung verbunden sind;
die neunten Anschlüsse (N9) der verschiedenen Verwaltungsschaltungen (81) mit einem gleichen ersten Hilfsbatteriespannungsversorgungsanschluss (VAUX+) verbunden sind;
die zehnten Anschlüsse (N9) der verschiedenen Verwaltungsschaltungen (81) mit einem gleichen zweiten Hilfsbatteriespannungsversorgungsanschluss (VAUX-) verbunden sind; und
in jeder Verwaltungsschaltung (81) die erste Stufe (83) geeignet ist, eine zwischen dem ersten (N1) und der zweiten (N2) Anschluss der Schaltung angelegte Ladewechselspannung (V_{AC}) in eine zwischen dem dritten (N3) und dem vierten (N4) Anschluss der Schaltung angelegte erste Gleichspannung (V_{OC1}) umzuwandeln, und die zweite Stufe (85) geeignet ist, die Transformation der ersten Gleichspannung (V_{OC1}) mit Isolierung einerseits in eine zwischen dem siebten (N7) und achten (N8) Anschluss der Schaltung angelegte zweite Gleichspannung (V_{DC2}) mit einem Übersetzungsverhältnis k zu gewährleisten und andererseits in eine zwischen dem neunten (N9) und dem zehnten (N10) Anschluss der Schaltung angelegte dritte Gleichspannung (V_{DC3}) mit einem Übersetzungsverhältnis k' zu gewährleisten, wobei die zweite Stufe darüber hinaus geeignet ist, die Transformation der zweiten Gleichspannung (V_{DC2}) mit Isolierung in die dritte Gleichspannung (V_{DC3}) mit einem Übersetzungsverhältnis in der Größenordnung von k'/k zu gewährleisten.

2. Batterie nach Anspruch 1, wobei in jeder Verwaltungsschaltung (81) die zweite Stufe (85) einen isolierten DC-DC-Wandler aufweist mit:
- einer Primärstufe (I), die Folgendes aufweist:
eine erste Wicklung (3) mit einem ersten Ende, das mit dem fünften Anschluss (N5) der Verwaltungsschaltung gekoppelt ist,
einen primären Parallelschwingkreis (4), der mit einem zweiten Ende der ersten Wicklung (3) gekoppelt ist,
eine zweite Wicklung (6), die parallel zu dem primären Parallelschwingkreis (4) aufgebaut ist und die Primärseite eines ersten Transformators (T₂) bildet; und
einen ersten (7) und einen zweiten (8) Primärschalter, die jeweils einen Ausgangszweig des primären Parallelschwingkreises (4) mit dem sechsten Anschluss (N6) der Verwaltungsschaltung koppeln,
- einer ersten Sekundärstufe (II), die Folgendes aufweist:
eine dritte Wicklung (11), deren erstes Ende mit dem siebten Anschluss (N7) der Verwaltungsschaltung gekoppelt ist,
eine vierte Wicklung (13), die mit einem zweiten Ende der dritten Wicklung (11) gekoppelt ist und die Sekundärseite eines ersten Transformators (T₂) bildet; und
einen ersten (14) und einen zweiten (15) Sekundärschalter, die jeweils ein Ende der vierten Wicklung (13) mit dem achten Anschluss (N8) der Verwaltungsschaltung koppeln,
- und einer zweiten Sekundärstufe (II'), die Folgendes aufweist:
eine siebte Wicklung (61), deren erstes Ende mit dem neunten Anschluss (N9) der Verwaltungsschaltung gekoppelt ist,
eine achte Wicklung (63), die mit einem zweiten Ende der siebten Wicklung (61) gekoppelt ist und eine zweite Sekundärseite des ersten Transformators (T₂) bildet; und
dritte (64) und vierte (65) Sekundärschalter, die jeweils ein Ende der achten Wicklung (63) mit dem zehnten Anschluss (N10) der Verwaltungsschaltung koppeln.

3. Batterie nach Anspruch 2, wobei in jeder Verwaltungsschaltung (81) die zweite Stufe (85) Steuermittel aufweist, die dafür ausgelegt sind, während einer ersten Phase abwechselnd das Ausschalten des ersten Primärschalters (7) und des ersten (14) und dritten (64) Sekundärschalters und das Einschalten des zweiten Primärschalters (8) und des zweiten (15) und vierten (65) Sekundärschalters zu gewährleisten, und während einer zweiten Phase das Einschalten des ersten Primärschalters (7) und des ersten (14) und des dritten (64) Sekundärschalters und das Ausschalten des zweiten Primärschalters (8) und des zweiten (15) und des vierten (65) Sekundärschalters zu gewährleisten.

4. Batterie nach einem der Ansprüche 1 bis 3, wobei jedes Modul (90) eine Vielzahl von elektrochemischen Akkumulatoren aufweist, die in Reihe und/oder parallel zwischen den negativen Anschluss (v-) und den positiven Anschluss (v+) des Moduls geschaltet sind.

5. Batterie nach einem der Ansprüche 1 bis 4, wobei in jeder Verwaltungsschaltung (81) die erste Stufe (83) einen geregelten, sinusförmigen Strom aufnehmenden AC-DC-Wandler aufweist.

## Claims

1. Electric battery comprising a plurality of electric power storage modules (90), each module comprising a negative terminal (v-) and a positive terminal (v+) and the modules being series-coupled between a negative terminal (V-) and a positive terminal (V+) of the battery and, associated with each module (90), a power management circuit (81) comprising a first stage (83) comprising first (N1), second (N2), third (N3), and fourth (N4) terminals, and a second stage (85) comprising fifth (N5), sixth (N6), seventh (N7), eighth (N8), ninth (N9), and tenth (N10) terminals, wherein:
each management circuit (81) has its third (N3) and fourth (N4) terminals respectively connected to its fifth (N5) and sixth (N6) terminals;
each management circuit (81) has its seventh (N7) and eighth (N8) terminals respectively connected to the positive terminal (v+) and to the negative terminal (v-) of the module (90) with which it is associated;
the first terminals (N1) of the different management circuits (81) are connected to a same first terminal (VAC1) of application of an AC battery charge voltage;
the second terminals (N2) of the different management circuits (81) are connected to a same second terminal (VAC1) of application of the AC battery charge voltage;
the ninth terminals (N9) of the different management circuits (81) are connected to a same first auxiliary battery voltage supply terminal (VAUX+);
the tenth terminals (N9) of the different management circuits (81) are connected to a same second auxiliary battery voltage supply terminal (VAUX-); and
in each management circuit (81), the first stage (83) is adapted to converting an AC charge voltage (V_{AC}) applied between the first (N1) and second (N2) terminals of the circuit into a first DC voltage (V_{DC1}) applied between the third (N3) and fourth (N4) terminals of the circuit, and second stage (85) is adapted to ensuring the transformation, comprising the isolation, of the first DC voltage (V_{DC1}) into on the one hand a second DC voltage (V_{DC2}) applied between the seventh (N7) and eighth (N8) terminals of the circuit, with a transformation ratio k, and on the other hand a third DC voltage (V_{DC3}) applied between the ninth (N9) and tenth (N10) terminals of the circuit, with a transformation ratio k', the second stage being further adapted to ensuring the transformation, comprising the isolation, of the second DC voltage (V_{DC2}) into the third DC voltage (V_{DC3}) with a transformation ratio in the order of k'/k.

2. Battery according to claim 1, wherein, in each management circuit (81), the second stage (85) comprises an insulated DC-DC converter comprising:
- a primary stage (I) comprising:
a first winding (3) having a first end coupled to the fifth terminal (N5) of the management circuit;
a primary parallel resonant circuit (4) coupled to a second end of the first winding (3);
a second winding (6) assembled in parallel with the primary parallel resonant circuit (4) and forming the primary of a first transformer (T₂); and
first (7) and second (8) primary switches each coupling an output branch of the primary parallel resonant circuit (4) to the sixth terminal (N6) of the management circuit,
- a first secondary stage (II) comprising:
a third winding (11) having a first end coupled to the seventh terminal (N7) of the management circuit;
a fourth winding (13) coupled to a second end of the third winding (11) and forming the secondary of a first transformer (T₂); and
first (14) and second (15) secondary switches each coupling an end of the fourth winding (13) to the eighth terminal (N8) of the management circuit,
- and a second secondary stage (II') comprising:
a seventh winding (61) having a first end coupled to the ninth terminal (N9) of the management circuit;
an eighth winding (63) coupled to a second end of the seventh winding (61) and forming a second secondary of the first transformer (T₂); and
third (64) and fourth (65) secondary switches each coupling an end of the eighth winding (63) to the tenth terminal (N10) of the management circuit.

3. Battery according to claim 2, wherein, in each management circuit (81), the second stage (85) comprises control means adapted to alternately ensuring, during a first phase, the turning off of the first primary switch (7) and of the first (14) and third (64) secondary switches and the turning on of the second primary switch (8) and of the second (15) and fourth (65) secondary switches and, during a second phase, the turning on of the first primary switch (7) and of the first (14) and third (64) secondary switches and the turning off of the second primary switch (8) and of the second (15) and fourth (65) secondary switches.

4. Battery according to any of claim 1 to 3, wherein each module (90) comprises a plurality of electrochemical accumulators coupled in series and/or in parallel between the negative terminal (v-) and the positive terminal (v+) of the module.

5. Battery according to any of claims 1 to 4, wherein, in each management circuit (81), the first stage (83) comprises a regulated sinusoidal current absorption AC-DC converter.
